# EUROPEAN PATENT APPLICATION

(11) **EP 2 605 216 A2**
(43) Date of publication of application: **19.06.2013**
(21) Application number: 12196529.7
(22) Date of filing: 11.12.2012
(51) Int. Cl.: G06T 11/40

(54) **Apparatus and method for improving image draw performance in portable terminal**

(30) Priority: 13.12.2011 KR 20110133682
(71) Applicant: Samsung Electronics Co., Ltd, Gyeonggi-do 443-742 (KR)
(72) Inventor: Kang, Ji-Young, Seoul (KR)
(74) Representative: Jenkins, Richard Gavin

(57) **Abstract**

An apparatus and method for drawing a background image in a portable terminal are provided. The method includes determining at least one color addition region based on background image configuration information, and drawing a background image by adding a color to the at least one color addition region.

## Description

### BACKGROUND OF THE INVENTION

### 1. Field of the Invention:

The present invention relates to an apparatus and method for drawing a background image in a portable terminal. More particularly, the present invention relates to an apparatus and method for improving a background image drawing performance in a portable terminal.

### 2. Description of the Related Art:

Portable terminals have become popular articles of modern persons due to their portability, and have evolved into multimedia devices that provide various services such as voice and video call functions, an information input/output function, a data storage function, and the like.

A portable terminal displays a variety of information on a display unit. For example, the portable terminal stores a plurality of images in order to represent a background of an item such as a button, an edit field, or a list.

The portable terminal uses a nine patch scheme in order to reduce an overhead of a storage unit that stores and generates a plurality of images in order to represent a background.

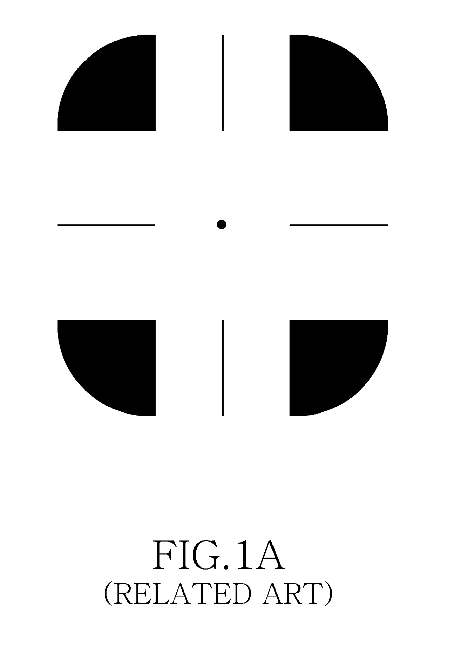

When using the nine patch scheme, the portable terminal represents a background by using nine patch images as shown in FIG. 1A.

FIG. 1A is a diagram illustrating a background of a portable terminal by using nine patch images according to the related art.

The portable terminal represents a background by using nine patch images with sizes of 1×10, 10×1, 1×1 and 10×10 pixels as shown in FIG. 1A.

However, when the portable terminal represents a background by using a nine patch scheme, the number of times of calling patch images increases according to the size of a background to be represented, thus causing a delay due to background image representation. For example, when the size of a background image is 308×54 pixels, the portable terminal calls patch images, configured as shown in FIG. 1A, 10,440 times. Accordingly, the portable terminal according to the related art has a delay due to the call of patch images.

When a delay occurs due to background image drawing as described above, a screen switching performance of the portable terminal may be degraded due to the delay.

Therefore, a need exists for a system and method for drawing a background image in a portable terminal. In particular, a need exists for an apparatus and method for reducing a background image drawing delay in a portable terminal.

The above information is presented as background information only to assist with an understanding of the present disclosure. No determination has been made, and no assertion is made, as to whether any of the above might be applicable as prior art with regard to the present invention.

### SUMMARY OF THE INVENTION

Aspects of the present invention are to address at least the above-mentioned problems and/or disadvantages and to provide at least the advantages below. Accordingly, an aspect of the present invention is to provide an apparatus and method for drawing a background image in a portable terminal.

Another aspect of the present invention is to provide an apparatus and method for reducing a background image drawing delay in a portable terminal.

Another aspect of the present invention is to provide an apparatus and method for improving a background image drawing performance in a portable terminal.

Another aspect of the present invention is to provide an apparatus and method for drawing a background image by setting a color addition region according to the size of a background image to be represented in a portable terminal.

In accordance with an aspect of the present invention, a method for drawing a background image in a portable terminal is provided. The method includes determining at least one color addition region based on background image configuration information, and drawing a background image by adding a color to the at least one color addition region.

The method may further include determining whether to add at least one patch image based on the background image configuration information before the determining of the at least one color addition region, and proceed to the determining of the at least one color addition region when the patch image is determined not to be added.

The method may further include determining an addition position of the at least one patch image based on the background image configuration information when the at least one patch image is to be added.

According to another aspect of the present invention, an apparatus for drawing a background image in a portable terminal is provided. The apparatus includes a control unit for determining at least one color addition region based on background image configuration information, and for drawing a background image by adding a color to the at least one color addition region, and a display unit for displaying the background image drawn by the control unit.

The control unit may determine whether to add at least one patch image based on the background image configuration information, and determine the at least one color addition region based on the background image configuration information when the at least one patch image is determined not to be added.

The control unit may determine an addition position of the at least one patch image based on the background image configuration information when the at least one patch image is to be added.

According to another aspect of the present invention, non-transient computer readable storage medium is provided. The storage medium stores instructions that, when executed, causes at least one processor to perform a method that includes determining at least one color addition region based on background image configuration information, and drawing a background image by adding a color to the at least one color addition region.

Other aspects, advantages, and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other aspects, features, and advantages of certain exemplary embodiments of the present invention will become more apparent from the following description taken in conjunction with the accompanying drawings, in which:

FIG. 1A is a diagram illustrating a background of a portable terminal by using nine patch images according to the related art.

FIG. 1B is a diagram illustrating a block configuration of a portable terminal according to an exemplary embodiment of the present invention;

FIG. 2 is a diagram illustrating a process for drawing a background image in a portable terminal according to an exemplary embodiment of the present invention;

FIG. 3 is a diagram illustrating a background image according to an exemplary embodiment of the present invention; and

FIG. 4 is a diagram illustrating a color addition region according to an exemplary embodiment of the present invention.

Throughout the drawings, it should be noted that like reference numbers are used to depict the same or similar elements, features, and structures.

### DETAILED DESCRIPTION OF EXEMPLARY EMBODIMENTS

The following description with reference to the accompanying drawings is provided to assist in a comprehensive understanding of exemplary embodiments of the invention as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope and spirit of the invention. In addition, descriptions of well-known functions and constructions may be omitted for clarity and conciseness.

The terms and words used in the following description and claims are not limited to the bibliographical meanings, but, are merely used by the inventor to enable a clear and consistent understanding of the invention. Accordingly, it should be apparent to those skilled in the art that the following description of exemplary embodiments of the present invention is provided for illustration purpose only and not for the purpose of limiting the invention as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

Also, the terms used herein are defined according to the functions of the present invention. Thus, the terms may vary depending on users' or operators' intentions or practices. Therefore, the terms used herein should be understood based on the descriptions made herein.

Hereinafter, a description will be given of a scheme for drawing a background image in a portable terminal according to exemplary embodiments of the present invention.

In the following description, examples of a portable terminal include a mobile terminal, a Personal Digital Assistant (PDA), a laptop computer, a smart phone, a netbook, a Mobile Internet Device (MID), an Ultra Mobile Personal Computer (UMPC), a tablet PC, a navigation device, an MP3 player, and the like.

A configuration of the portable terminal for drawing a background image will be described below.

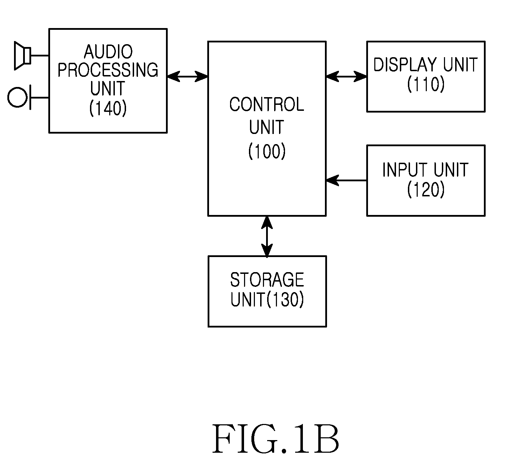

FIG. 1B illustrates a block configuration of a portable terminal according to an exemplary embodiment of the present invention.

Referring to FIG. 1B, the portable terminal may include a control unit 100, a display unit 110, an input unit 120, a storage unit 130, and an audio processing unit 140.

The control unit 100 controls an overall operation of the portable terminal.

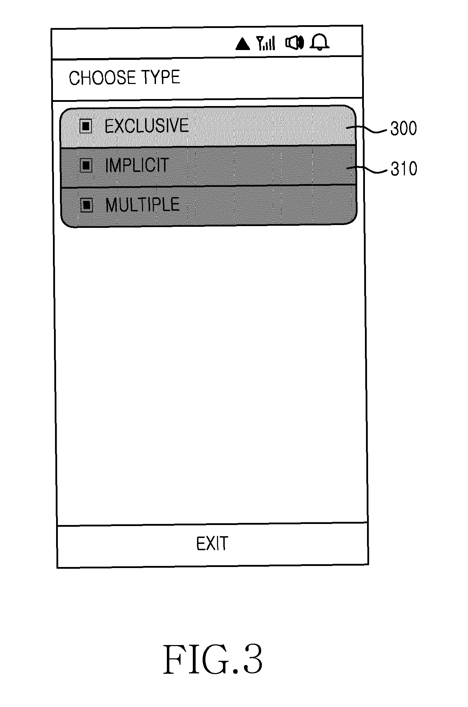

According to exemplary embodiments of the present invention, the control unit 100 controls the display unit 110 to draw a background image of displayed information. For example, when drawing a first background image such as the first background image 300 illustrated in FIG. 3, the control unit 100 determines an addition position of a patch image based on background image configuration information. Thereafter, the control unit 100 determines a color addition region in consideration of the background image configuration information and the addition position of the patch image. Thereafter, the control unit 100 adds the patch image to the addition position and adds a predetermined color to the color addition region to draw the background image.

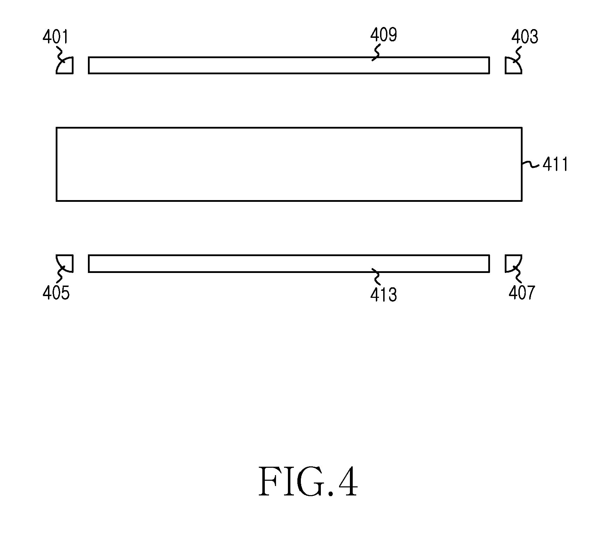

According to exemplary embodiments of the present invention, the control unit 100 may determine whether to use the patch image, based on the background image configuration information. If the patch image is determined not to be used, the control unit 100 may draw the background image by adding the predetermined color to the color addition region determined based on the background image configuration information. The background image configuration information may include a size of the background image, a position of the background image, a color of the background image, a shape of the background image, or the like. The patch image is an image of a portion that cannot be represented by the color addition region, such as edge images 401, 403, 405, and 407 illustrated in FIG. 4.

After the first background image 300 illustrated in FIG. 3 is drawn as described above, the control unit 100 may draw a second background image 310 by the above-described method.

Under the control of the control unit 100, the display unit 110 displays status information of the portable terminal, characters input by a user, moving pictures, still pictures, and the like. For example, the display unit 110 displays the background image drawn by the control unit 100 as illustrated in FIG. 3.

The input unit 120 provides the control unit 100 with input data generated by user selection. For example, the input unit 120 may include only a control button for control of the portable terminal. As another example, the input unit 120 may include a keypad for receiving input data from the user. The input unit 120 may include input keys and function keys for receiving user input. For example, the input unit 120 may include input keys and function keys for receiving an input of numbers or various sets of letter information, setting various functions, and controlling functions of the portable terminal. Such an input unit 120 may be formed by one or a combination of input means such as a touch pad, a touchscreen, a button-type key pad, a joystick, a wheel key, and the like.

The storage unit 130 may include a program storage unit for storing a program for controlling an operation of the portable terminal, and a data storage unit for storing data generated during the execution of a program.

The audio processing unit 140 controls the input/output of audio signals. For example, the audio processing unit 140 outputs an audio signal received from the control unit 100 to the outside through a speaker, and provides an audio signal received from a microphone to the control unit 100.

Although not illustrated in FIG. 1B, the portable terminal may further include a communication unit for processing signals transmitted/received through an antenna.

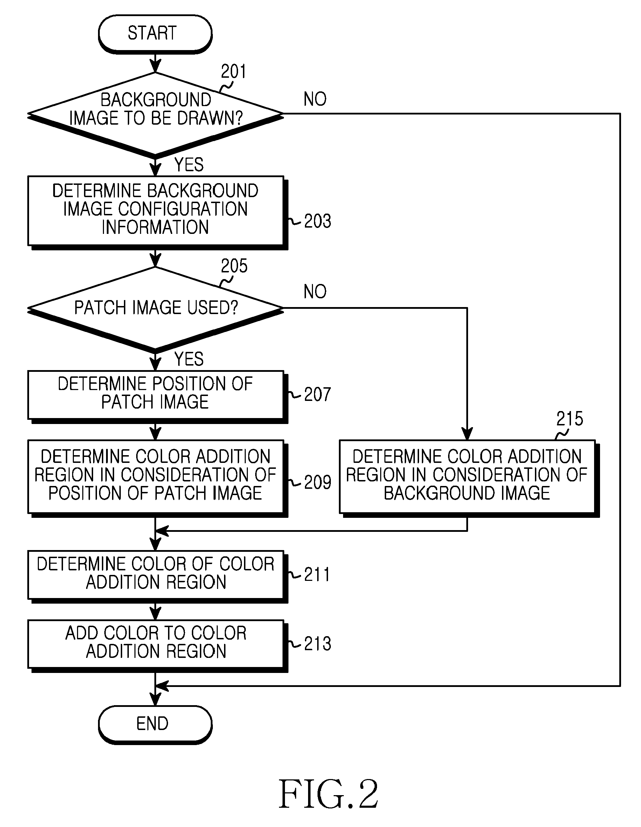

FIG. 2 illustrates a process for drawing a background image in a portable terminal according to an exemplary embodiment of the present invention. FIG. 3 is a diagram illustrating a background image according to an exemplary embodiment of the present invention. FIG. 4 is a diagram illustrating a color addition region according to an exemplary embodiment of the present invention.

Referring to FIGs. 2-4, in step 201, the portable terminal determines whether to draw a background image. When the portable terminal determines that the background image is not to be drawn, the portable terminal ends the present algorithm.

In contrast, if the portable terminal determines that the background image is to be drawn in step 201, the portable terminal proceeds to step 203. In step 203, the portable terminal determines configuration information of the background image to be drawn. The background image configuration information may include a size of the background image, a position of the background image, a color of the background image, a shape of the background image, or the like.

Thereafter, in step 205, the portable terminal determines whether to use a patch image to draw the background image, based on the background image configuration information. For example, based on the background image configuration information, the portable terminal determines whether there is a portion that cannot be represented by a color addition region. The patch image is an image of a portion that cannot be represented by the color addition region, such as edge images 401, 403, 405, and 407 illustrated in FIG. 4.

When the portable terminal determines that the patch image is to be used to draw the background image in step 205, the portable terminal proceeds to step 207. In step 207, the portable terminal determines an addition position of the patch image. For example, when drawing a first background image 300 illustrated in FIG. 3, the portable terminal determines to use the patch image to represent an edge of the first background image 300. Accordingly, the portable terminal determines to add patch images 401, 403, 405, and 407 to the first background image 300 as illustrated in FIG. 4.

Thereafter, in step 209, the portable terminal determines the color addition region based on the background image configuration information and the addition position of the patch image. For example, when adding the patch images 401, 403, 405, and 407 to draw the first background image 300 as illustrated in FIG. 4, the portable terminal determines rectangular color addition regions 409, 411 and 413 based on position information of the patch images 401, 403, 405, and 407. Specifically, the portable terminal determines the first color addition region 409 based on the first patch image 401 and the second patch image 403. Also, the portable terminal determines the second color addition region 413 based on the third patch image 405 and the fourth patch image 407. Also, the portable terminal determines the other region, except the first color addition region 409 and the second color addition region 413, as the third color addition region 411. The portable terminal may determine a color addition region having shapes other than a rectangular shape.

Thereafter, in step 211, the portable terminal determines a color of the color addition region based on the background image configuration information.

Thereafter, in step 213, the portable terminal draws the background image by adding the color determined in step 211 to the color addition region determined in step 209.

In contrast, when the portable terminal determines that the patch image is not to be used to draw the background image in step 205, the portable terminal proceeds to step 215. In step 215, the portable terminal determines a color addition region based on the background image configuration information. For example, when the background image is rectangular, the portable terminal determines a rectangular color addition region.

Thereafter, in step 211, the portable terminal determines a color of the color addition region based on the background image configuration information.

Thereafter, in step 213, the portable terminal draws the background image by adding the color determined in step 211 to the color addition region determined in step 209.

Thereafter, the portable terminal ends the present algorithm. If there is an additional background image to be drawn, the portable terminal draws an additional background image by repeating the above-described operations. For example, when the first background image 300 illustrated in FIG. 3 is drawn, the portable terminal draws the second background image 310 by repeating the above-described operation.

As described above, when setting the color addition region of the background image in the portable terminal, the portable terminal sets coordinates of the color addition region based on the size and position of the background image. Herein, the portable terminal determines a rectangular color addition region according to the coordinates of the color addition region. If the patch image is used, the portable terminal sets the coordinates of the color addition region based on the size and position of the background image and the size and position of the patch image.

In the above exemplary embodiment of the present invention, when the portable terminal determines that the patch image is not to be used according to the background image configuration information in step 205, the portable terminal proceeds to step 215 and determines the color addition region based on the background image configuration information.

In another exemplary embodiment of the present invention, the portable terminal may determine the background image configuration information in step 203), and then determine the color addition region based on the background image configuration information. For example, the portable terminal may draw the background image by using only the color addition region without using the patch image. In this case, the portable terminal omits steps 205 to 209 illustrated in FIG. 2.

It will be appreciated that exemplary embodiments of the present invention according to the claims and description in the specification can be realized in the form of hardware, software or a combination of hardware and software. Any such software may be stored in a non-transient computer readable storage medium. The computer readable storage medium stores one or more programs (software modules), the one or more programs comprising instructions, which when executed by one or more processors in an electronic device, cause the electronic device to perform a method of the present invention. Any such software may be stored in the form of volatile or non-volatile storage such as, for example, a storage device like a ROM, whether erasable or rewritable or not, or in the form of memory such as, for example, RAM, memory chips, device or integrated circuits or on an optically or magnetically readable medium such as, for example, a CD, DVD, magnetic disk or magnetic tape or the like. It will be appreciated that the storage devices and storage media are exemplary embodiments of machine-readable storage that are suitable for storing a program or programs comprising instructions that, when executed, implement embodiments of the present invention. Accordingly, exemplary embodiments of the present invention provide a program comprising code for implementing apparatus or a method as claimed in any one of the claims of this specification and a machine-readable storage storing such a program. Still further, such programs may be conveyed electronically via any medium such as a communication signal carried over a wired or wireless connection and exemplary embodiments of the present invention suitably encompass the same.

As described above, exemplary embodiments of the present invention set the color addition region based on the size of the background image to be drawn in the portable terminal, and add the color to the color addition region. Accordingly, exemplary embodiments of the present invention can improve the background image drawing performance.

Also, exemplary embodiments of the present invention can improve the screen switching performance of the portable terminal by improving the background image drawing performance in the portable terminal.

While the present invention has been shown and described with reference to certain exemplary embodiments thereof, it will be understood by those skilled in the art that various changes in form and details may be made therein without departing from the spirit and scope of the invention as defined by the appended claims and their equivalents..

It will be appreciated that embodiments of the present invention according to the claims and description in the specification can be realized in the form of hardware, software or a combination of hardware and software.

Any such software may be stored in a computer readable storage medium. The computer readable storage medium stores one or more programs (software modules), the one or more programs comprising instructions, which when executed by one or more processors in an electronic device, cause the electronic device to perform a method of the present invention.

Any such software may be stored in the form of volatile or non-volatile storage such as, for example, a storage device like a ROM, whether erasable or rewritable or not, or in the form of memory such as, for example, RAM, memory chips, device or integrated circuits or on an optically or magnetically readable medium such as, for example, a CD, DVD, magnetic disk or magnetic tape or the like. It will be appreciated that the storage devices and storage media are embodiments of machine-readable storage that are suitable for storing a program or programs comprising instructions that, when executed, implement embodiments of the present invention.

Accordingly, embodiments provide a program comprising code for implementing apparatus or a method as claimed in any one of the claims of this specification and a machine-readable storage storing such a program. Still further, such programs may be conveyed electronically via any medium such as a communication signal carried over a wired or wireless connection and embodiments suitably encompass the same.

## Claims

1. A method for drawing a background image in a portable terminal, the method comprising:
determining at least one color addition region based on background image configuration information; and
drawing a background image by adding a color to the at least one color addition region.

2. The method of claim 1, further comprising:
determining whether to add at least one patch image based on the background image configuration information before the determining of the at least one color addition region,
wherein the method proceeds to the determining of the color addition region when the at least one patch image is determined not to be added.

3. The method of claim 2, further comprising:
determining an addition position of the at least one patch image based on the background image configuration information when the at least one patch image is to be added.

4. The method of claim 3, wherein the determining of the at least one color addition region comprises determining the at least one color addition region based on the background image configuration information and the addition position of the at least one patch image.

5. The method of claim 4, wherein the determining of the at least one color addition region comprises determining coordinates of the at least one color addition region based on the background image configuration information and the addition position of the at least one patch image.

6. The method of claim 1, wherein the determining of the at least one color addition region comprises determining coordinates of the at least one color addition region based on the background image configuration information.

7. A portable terminal comprising:
a control unit for determining at least one color addition region based on background image configuration information, and for drawing a background image by adding a color to the at least one color addition region; and
a display unit for displaying the background image drawn by the control unit.

8. The method of claim 1 or the portable terminal of claim 7, wherein the background image configuration information includes at least one of a size of the background image, a position of the background image, a color of the background image, and a shape of the background image.

9. The portable terminal of claim 7, wherein the control unit determines whether to add at least one patch image based on the background image configuration information, and determines the at least one color addition region based on the background image configuration information when the at least one patch image is determined not to be added.

10. The portable terminal of claim 9, wherein the control unit determines an addition position of the patch image based on the background image configuration information when the patch image is to be added.

11. The portable terminal of claim 10, wherein the control unit determines the at least one color addition region based on the background image configuration information and the addition position of the at least one patch image.

12. The portable terminal of claim 11, wherein the control unit determines coordinates of the at least one color addition region based on the background image configuration information and the addition position of the at least one patch image.

13. The method of claim 1 or the portable terminal of claim 7, wherein the at least one color addition region has a rectangular shape.

14. The portable terminal of claim 7, wherein the control unit determines coordinates of the at least one color addition region based on the background image configuration information.
